# EUROPÄISCHE PATENTANMELDUNG

(11) **EP 2 829 904 A1**
(43) Veröffentlichungstag der Anmeldung: **28.01.2015**
(21) Anmeldenummer: 13177941.5
(22) Anmeldetag: 25.07.2013
(51) Int. Cl.: G02C 5/12

(54) **Brillengestell mit Nasenstütze**

(71) Anmelder: SdS InvestCorp AG, 6300 Zug (CH)
(72) Erfinder: Arnold, Peter B., 6340 Baar (CH); Pfister, Rolf P., 8618 Oetwil am See (CH)
(74) Vertreter: AMMANN PATENTANWÄLTE AG BERN

(57) **Zusammenfassung**

Eine konstruktiv einfache Realisierung einer Nasenstütze (7) an einem Brillengestell (1) wird angegeben. Über zwei am Brillengestell (1) angeordnete Träger mit jeweils einem nach oben ragenden freien Ende wird ein flexibles Hohlprofil (9) in einem Bogen aufgesteckt. Beim Tragen der Brille legt sich das Hohlprofil (9) über die Nase der die Brille tragenden Person.

## Beschreibung

Die Erfindung bezieht sich auf ein Brillengestell mit Nasenstütze gemäss Oberbegriff des Patentanspruchs 1.

Als Brillengestell im Sinne der Erfindung sollen mechanische Teile gelten, welche zwei Brillengläser halten. Die Nasenstütze ist eine Vorrichtung zum Abstützen des Brillengestells auf der Nase einer die Brille tragenden Person. Die im vorliegenden Text verwendeten Bezeichnungen "oben" und "unten" beziehen sich auf die Lage einer aufrecht positionierten, die Brille tragenden Person. Die meisten Brillengestelle weisen zudem seitliche Bügel auf, mit welchen die Brille zusätzlich auf den Ohren einer die Brille tragenden Person gehalten wird. Das erfindungsgemässe Brillengestell muss aber nicht zwingend solche Bügel umfassen.

Viele bekannte Nasenstützen bestehen aus zwei so genannten Pads oder Nasenpads, die am Brillengestell befestigt oder angeformt sind. Bei vielen Brillengestellen sind die beispielsweise aus einem weichen Kunststoff bestehenden Nasenpads über so genannte Stegstützen mit dem Brillengestell verbunden. Die Anpassung der Position der Brille bezüglich der Augen der die Brille tragenden Person erfolgt bei solchen Brillengestellen üblicherweise durch Biegen der Stegstützen. In den Dokumenten DE 198 48 684 A1 und US 5 581 312 A sind derartige Nasenstützen beschrieben.

Die bekannten Nasenstützen der vorangehend beschriebenen Art haben den Nachteil, dass es meistens nur eine einzige Position gibt, in der die Brille bequem auf der Nase sitzt. Oft hat aber die die Brille tragende Person das Bedürfnis, die Brille auf der Nase zu verschieben, beispielsweise dann, wenn die Person einen klein gedruckten Text lesen will. Ein weiterer Nachteil der bekannten Nasenstützen besteht darin, dass sie das Design der Brille stören und vom aussenstehenden Betrachter als Fremdkörper empfunden werden können. In vielen Fällen wird zudem durch die bekannten Nasenstützen ein platzsparendes Zusammenfalten der Brille behindert. Eine derartige, besonders platzsparend zusammenklappbare Brille ist im Patent EP 1 785 763 B1 beschrieben und weist hochelastische Brillenbügel auf, die in zwei Stellungen umschnappbar sind.

Die bekannten Nasenstützen können sich auch bei nicht ganz bestimmungsgemässen Benutzungsarten der Brille als nachteilig erweisen, nämlich dann, wenn die Brille auf das Haar aufgesetzt und indirekt auch als Haarreif benutzt oder mit einem Bügel beispielsweise zwischen den Knöpfen in eine Bluse oder ein Hemd eingesteckt wird. Beim Entfernen der Brille aus diesen Positionen kann diese mit der Nasenstütze hängen bleiben, was nicht nur unangenehm sein, sondern auch zu Beschädigungen der Brille führen kann. Um diesem Problem etwas abzuhelfen ist in der Schrift DE 10 2009 047 372 A1 eine Schutzvorrichtung für anpassbare Nasenstützen an einem Brillengestell vorgeschlagen.

Da die beschriebenen bekannten Nasenstützen unter sich sehr unterschiedlich hinsichtlich ihrer Grösse, Form und insbesondere Befestigungsart der Pads an den Stegstützen sind, müssen die Brillengeschäfte eine Vielzahl von Pads vorrätig halten, um möglichst alle Kunden bedienen zu können, die ihre Pads auswechseln oder ersetzen lassen möchten.

Ausgehend von diesem Stand der Technik und der vorstehend aufgeführten Problemschilderung bezüglich der Nasenstütze stellen sich für die vorliegende Erfindung die Aufgaben, ein Brillengestell mit Nasenstütze anzugeben, bei dem sich die Brille auf der Nase verschieben und in verschiedenen Positionen tragen lässt, das elegant aussieht und in zusammengefaltetem Zustand wenig Platz beansprucht, das nicht die Tendenz hat, sich in Haaren oder Kleidern zu verheddern und bei dem die Vorratshaltung und der Ersatz äusserst einfach ist.

Diese Aufgabe wird erfindungsgemäss durch die im kennzeichnenden Teil des Patentanspruchs 1 angegebenen Merkmale gelöst.

Unter dem Begriff "Hohlprofil" ist ein länglicher Körper mit einem entlang seiner Länge gleich bleibenden Querschnitt zu verstehen. Mit dem Begriff "flexibles Hohlprofil" ist im vorliegenden Zusammenhang ein von Hand biegbares Hohlprofil gemeint.

Die Montage der Nasenstütze ist denkbar einfach. Über die beiden am Brillengestell angeordneten Träger wird das Hohlprofil gestülpt, derart dass sich später der Bogen über die Nase der die Brille tragenden Person legt.

Vorteilhafte Ausgestaltungen der Erfindung sind Gegenstand der abhängigen Ansprüche.

Bevorzugte Ausführungsarten der vorliegenden Erfindung werden anhand der Zeichnung nachstehend erläutert, im einzelnen zeigen
- Figur 1: eine perspektivische Ansicht eines ersten Ausführungsbeispiels des Brillengestells ohne Hohlprofil;
- Figur 2: eine Ansicht entsprechend Figur 1 mit Hohlprofil;
- Figuren 3 und 4: einen Aufriss und einen Grundriss des ersten Ausführungsbeispiels des Brillengestells ohne Hohlprofil;
- Figuren 5 und 6: einen Aufriss und einen Grundriss des ersten Ausführungsbeispiels des Brillengestells mit Hohlprofil;
- Figuren 7 und 8: einen Ausschnitt aus Figur 3 bzw. Figur 5 in einem vergrösserten Massstab;
- Figuren 9 und 10: einen nochmals vergrösserten Ausschnitt aus Figur 8 mit Varianten der Gestaltung des Endes des Hohlprofils;
- Figuren 11 und 12: eine Variante des Trägers ohne bzw. mit Hohlprofil;
- Figuren 13 und 14: eine weitere Variante des Trägers ohne bzw. mit Hohlprofil;
- Figuren 15 bis 23: weitere Ausführungsarten des Brillengestells;
- Figuren 24 bis 26: Ausführungsarten des Hohlprofils;
- Figuren 27 und 28: eine weitere Ausführungsart des Brillengestells und
- Figuren 29 und 30: Einzelheiten aus Figur 27 bzw. 28 perspektivisch und in vergrössertem Massstab.

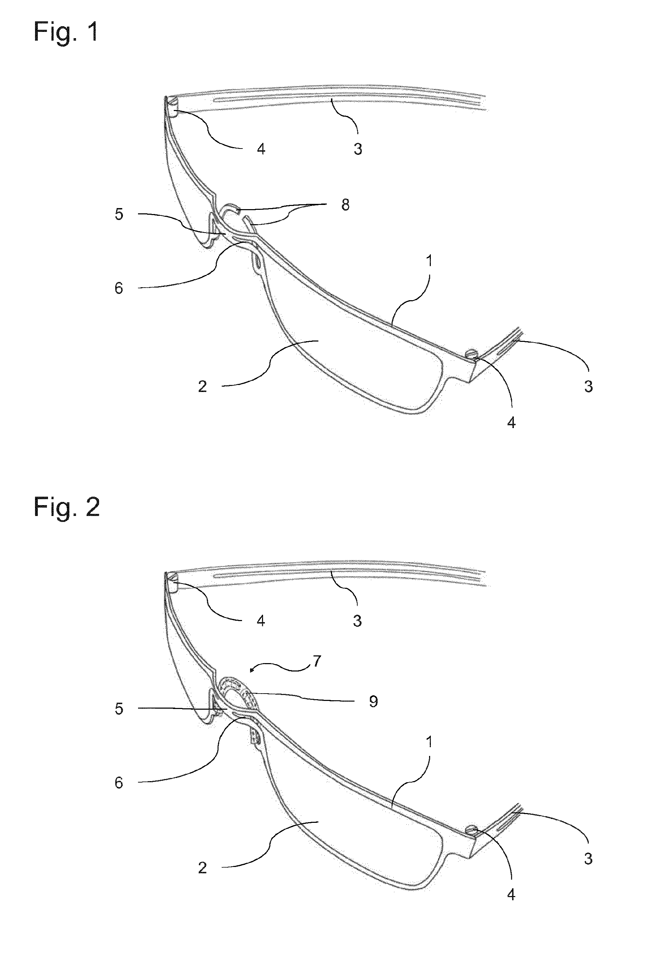

Die Figuren 1 bis 6, 15 bis 23 und 27 bis 28 zeigen jeweils ein als Ganzes mit der Bezugszahl 1 bezeichnetes Brillengestell, welches gemäss der Definition am Anfang dieser Beschreibung die Aufgabe hat, zwei Brillengläser 2 zu halten.

Die Figuren 1 bis 8 zeigen ein erstes Ausführungsbeispiel eines Brillengestells 1, wobei nur in den Figuren 1 und 2 zwei Bügel 3 sichtbar sind, die mittels Scharnieren 4 mit dem Brillengestell verbunden sind. Das Brillengestell 1 kann aus Metall bestehen und beispielsweise durch Ausschneiden aus einem Blech aus Federstahl einstückig hergestellt sein. Die Bügel können entsprechend dem Patent EP 1 785 763 B1 ausgebildet sein. Die Bügel 3 und die Scharniere sind aber hier nicht erfindungswesentlich und nur in den Figuren 1 und 2 dargestellt. Die Erfindung ist auch auf Brillengestelle 1 ohne Bügel und Scharniere anwendbar. Das Brillengestell 1 nach den Figuren 1 bis 8 umfasst zudem einen Nasensteg 5, der in diesem Beispiel Schlitze 6 aufweist, die ein elastisches Verformen des Brillengestells 1 zum Einsetzen der Gläser 2 ermöglichen. Die Nasenstütze ist als Ganzes mit 7 bezeichnet und besteht aus zwei am Brillengestell 1 angeordneten Trägern 8 mit einem nach oben gerichteten freien Ende. Ein elastisches, extrudiertes Hohlprofil 9, das im einfachsten Fall als kleiner Schlauch ausgebildet ist, verbindet die beiden Träger 8 in einem Bogen. Der Begriff "extrudiert" soll in diesem Zusammenhang einen länglichen Körper mit einem entlang seiner Länge gleich bleibenden Querschnitt bezeichnen. Der Begriff wird so oder ähnlich unter anderem beim rechnergestützten Konstruieren (CAD, computer aided design) verwendet und soll den Erfindungsgegenstand nicht auf durch ein Formpressverfahren hergestellte Hohlprofile einschränken. Das Hohlprofil 9 besteht vorzugsweise aus einem gummielastischen Material wie Gummi oder Kunststoff. Besonders geeignet ist Silicon, weil es farblos und hautfreundlich ist. Ausserdem ist auch ein feinporiger Schaumstoff als Material für das Hohlprofil 9 denkbar. Das Hohlprofil 9 kann im Brillenladen vorrätig gehalten werden, beispielsweise in Längen, die ein Mehrfaches der für eine durchschnittliche Brille benötigten Länge betragen, besonders bevorzugt auf einer Rolle. Für die Bestückung einer neuen Brille oder zum Ersetzen eines abgenutzten oder verfärbten Teils wird ein Stück von dem Hohlprofil 9 abgeschnitten und auf die freien Enden der beiden Träger 8 gesteckt. Durch entsprechende Dimensionierung des Innendurchmessers des Hohlprofils kann sichergestellt werden, dass dieses einen Passsitz erhält und dadurch im Verlaufe des Gebrauchs der Brille nicht verloren geht. Selbst dann, wenn ein solches Hohlprofil 9 verloren geht, ist für jedes Fachgeschäft die Lagerhaltung entsprechend einfach und ebenso einfach ist das Einfügen eines neuen Hohlprofils 9.

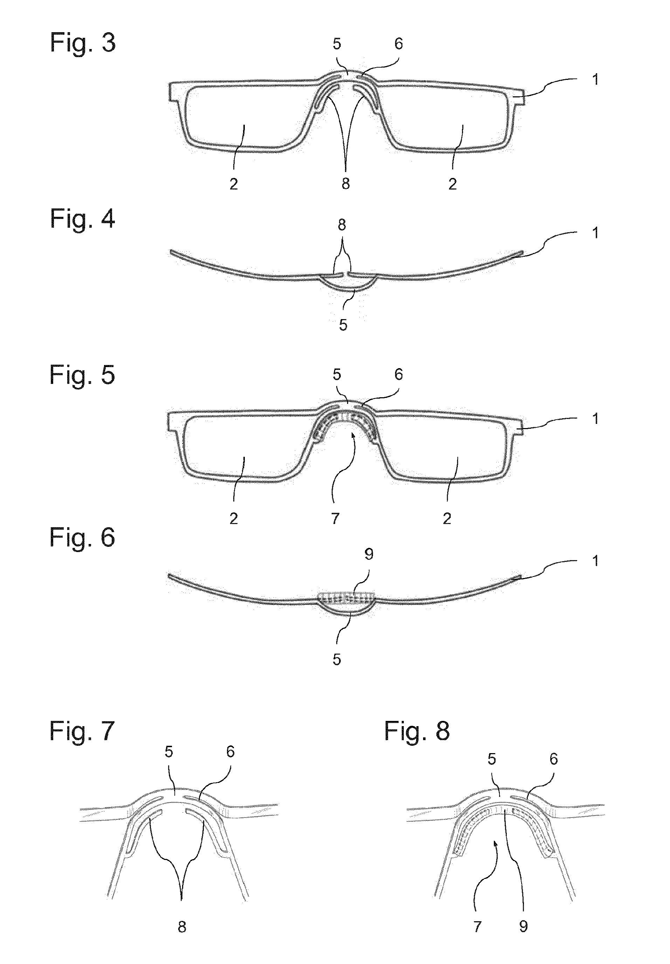

Bei dem in den Figuren 1 bis 6 dargestellten Ausführungsbeispiel sind der Nasensteg 5 und die beiden Träger 8 versetzt angeordnet, wie dies in den perspektivischen Darstellungen der Figuren 1 und 2 sowie den Grundrissdarstellungen der Figuren 4 und 6 deutlich erkennbar ist. Diese versetzte Anordnung kann so ausgestaltet sein, dass die zugehörigen Ebenen entweder parallel in einem Abstand angeordnet sind oder dass die beiden Ebenen V-förmig nach oben offen zueinander geneigt angeordnet sind. Dadurch wird die Montage des Hohlprofils 9 vereinfacht, aber es besteht gleichzeitig ein gewisses Risiko, dass sich beim Tragen der Brille das Hohlprofil 9 von den Trägern 8 löst. Um dies zu verhindern, kann zusätzlich oder alternativ zum bereits erwähnten Passsitz die Verbindung zusätzlich beispielsweise mit einem Klebstoff gesichert werden. Weitere Massnahmen zum Verhindern des selbsttätigen Lösens des Hohlprofils 9 von den Trägern 8 sind weiter unten unter Bezugnahme auf die Figuren 7, 8, 11 und 12 beschrieben.

Die Figuren 7 und 8 zeigen in einem vergrösserten Ausschnitt aus den Figuren 3 bzw. 5 eine Variante des ersten Ausführungsbeispiels. Der Nasensteg 5 und die Träger 8 sind dabei nicht gegeneinander versetzt, sondern liegen in der gleichen Ebene. Damit das Hohlprofil 9 montiert werden kann, werden die Träger 8 aus der gemeinsamen Ebene herausgebogen, wobei es genügt, wenn der Versatz zwischen dem Nasensteg 5 und den freien Enden der Träger 8 in der Grössenordnung des Aussendurchmessers des Hohlprofils 9 ist. Dann wird das vorher auf die passende Länge zugeschnittene Hohlprofil 9 auf die Träger 8 aufgesetzt und die Träger werden wieder in die gemeinsame Ebene mit dem Nasensteg 5 zurück gebogen. So verhindert der Nasensteg 5 das Abfallen des Hohlprofils 9, wie dies aus Figur 8 besonders deutlich hervorgeht.

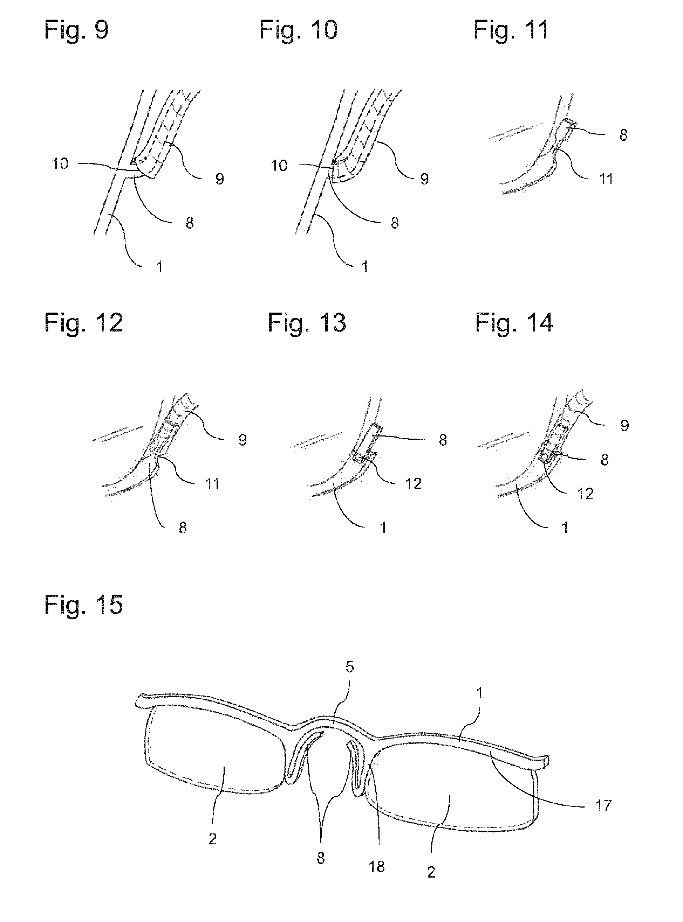

Die Figuren 9 und 10 zeigen im Detail zwei Varianten eines der beiden Enden 10 des Hohlprofils 9. Während bei der Darstellung nach Figur 9 das Hohlprofil 9 in einem rechten Winkel zu seiner Länge abgeschnitten ist, ist das Ende 10 gemäss Figur 10 in einem nicht rechten Winkel abgeschnitten und passt sich dadurch am Fuss des Trägers 8 in ästhetisch vorteilhafter Weise an die Kontur des Brillengestells 1 an.

In den Figuren 11 und 12 weist der Träger 8 einen Hinterschnitt 11 auf, in den sich das elastische Material am Ende des Hohlprofils 9 teilweise einzieht. Damit wird dem Abziehen des Hohlprofils 9 von den Trägern 8 ein zusätzlicher Widerstand entgegensetzt.

Die Figuren 13 und 14 zeigen einen alternativen Träger 8, der nicht wie die Träger der vorangehend dargestellten Ausführungsbeispiele einstückig am Brillengestell 1 angeformt, sondern mit einem Gelenk 12 schwenkbar am Brillengestell 1 angeordnet ist. Durch diese Massnahme kann sich das Hohlprofil 9 beim Tragen der betreffenden Brille der Nasenform der Person anpassen.

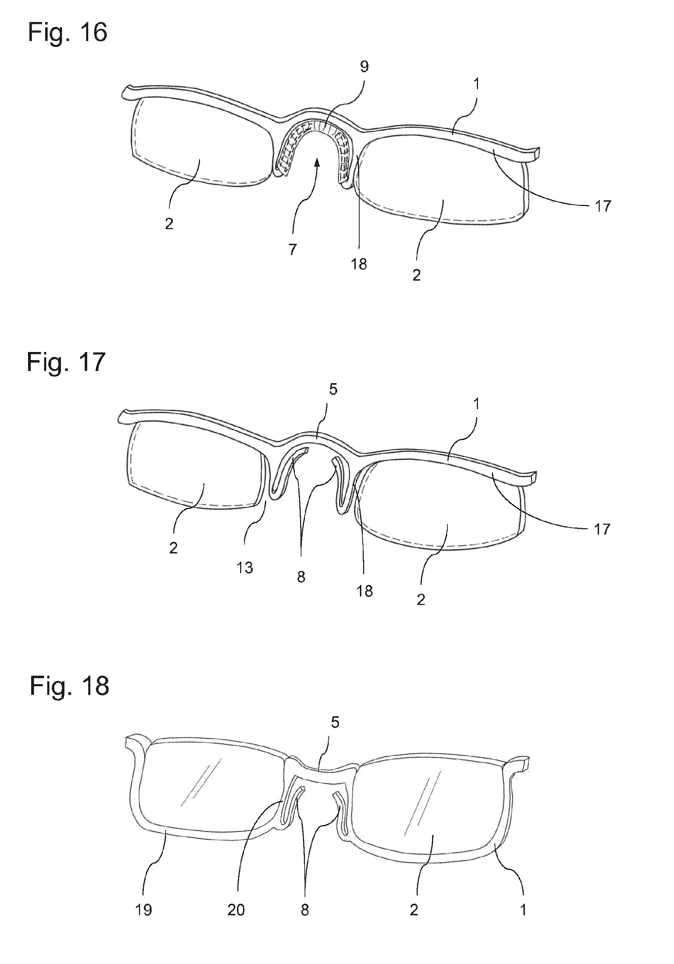

In den Figuren 15 bis 23 sind verschiedene Formen des Brillengestells 1 dargestellt. Dabei zeigen die Figuren 15 bis 17 ein rahmenloses Brillengestell 1, dessen Hauptbestandteil ein oberer Quersteg 17 ist und bei dem die Träger 8 an vom Quersteg 17 nach unten ragenden Erweiterungen 18 angeordnet sind. In einer Variante gemäss Figur 17 ist zwischen den Gläsern 2 und den Erweiterungen 18 jeweils ein Abstand 13 vorhanden.

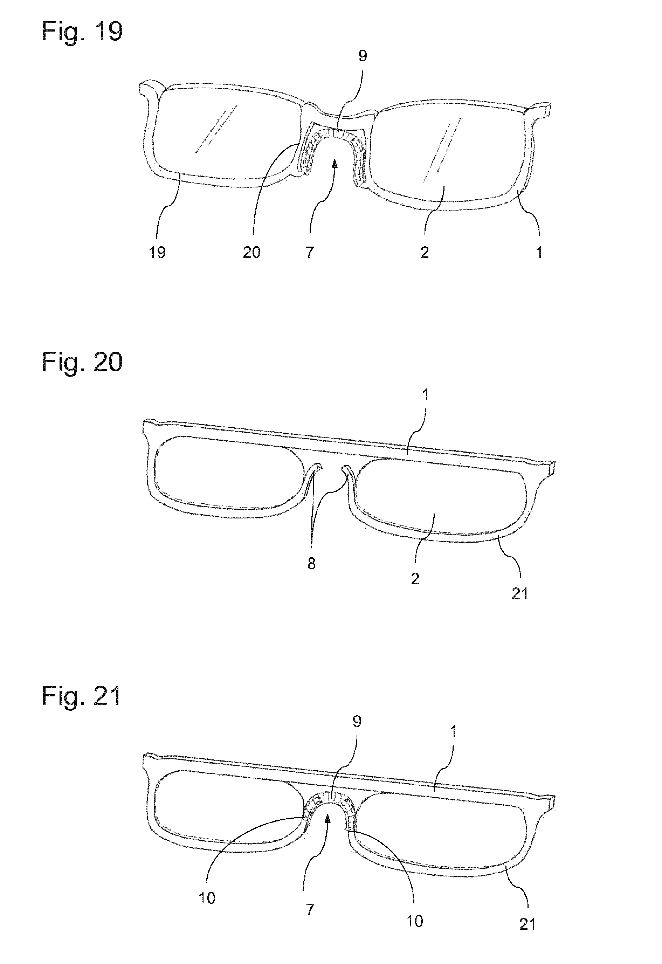

Die Figuren 18 und 19 zeigen - so zu sagen in Umkehrung des Prinzips nach den Figuren 15 bis 17 - ein Brillengestell 1 mit einem unteren Quersteg 19. Die Träger 8 gehen dabei vom Übergangsbereich zwischen dem Quersteg und nach oben ragenden Erweiterungen 20 aus, während diese Erweiterungen 20 den Nasensteg 5 tragen.

Eine weitere Art eines Brillengestells 1 ist in den Figuren 20 und 21 dargestellt. Dieses umfasst für jedes Brillenglas 2 einen nicht vollständig geschlossenen Teilrahmen 21, der in den Träger 8 für das Hohlprofil 9 übergeht.

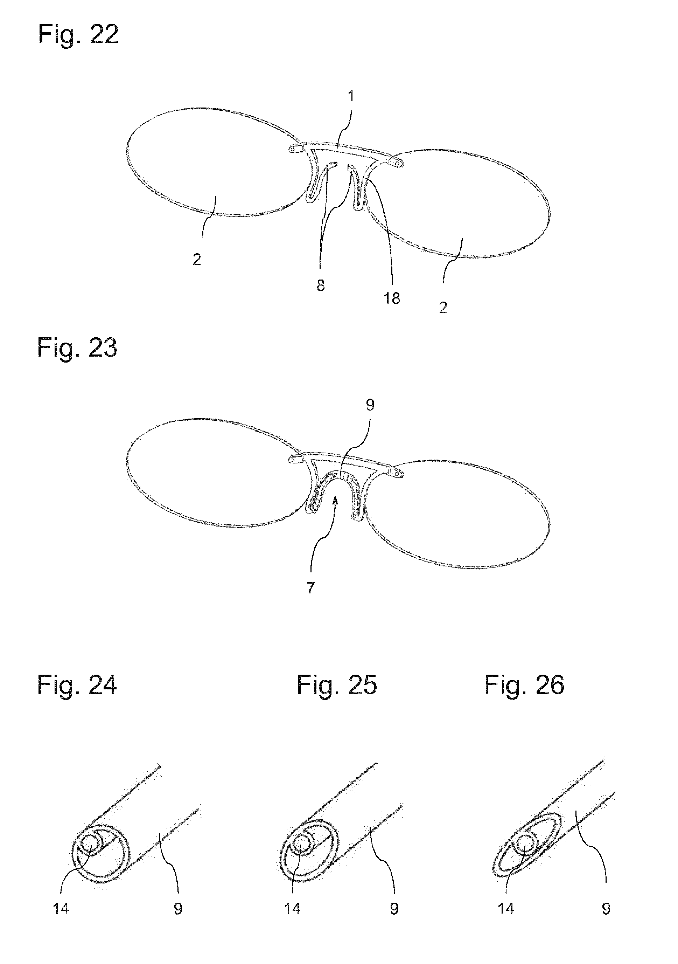

Die Figuren 22 und 23 zeigen ein rahmenloses Brillengestell 1, bei dem - ähnlich wie beim Brillengestell nach den Figuren 15 bis 17 - die Träger 8 an vom Nasensteg 5 nach unten ragenden Erweiterungen 18 angeordnet sind.

in den Figuren 24 bis 26 sind Varianten des Hohlprofils 9 dargestellt, das beispielsweise als doppelwandiges Hohlprofil ausgebildet sein kann, wobei der kleinere Hohlraum 14 zur Aufnahme des Hohlprofils 9 auf den Trägern 8 dient. Dabei kann die Aussenkontur des Hohlprofils elliptisch sein, wie die Figuren 25 und 26 zeigen.

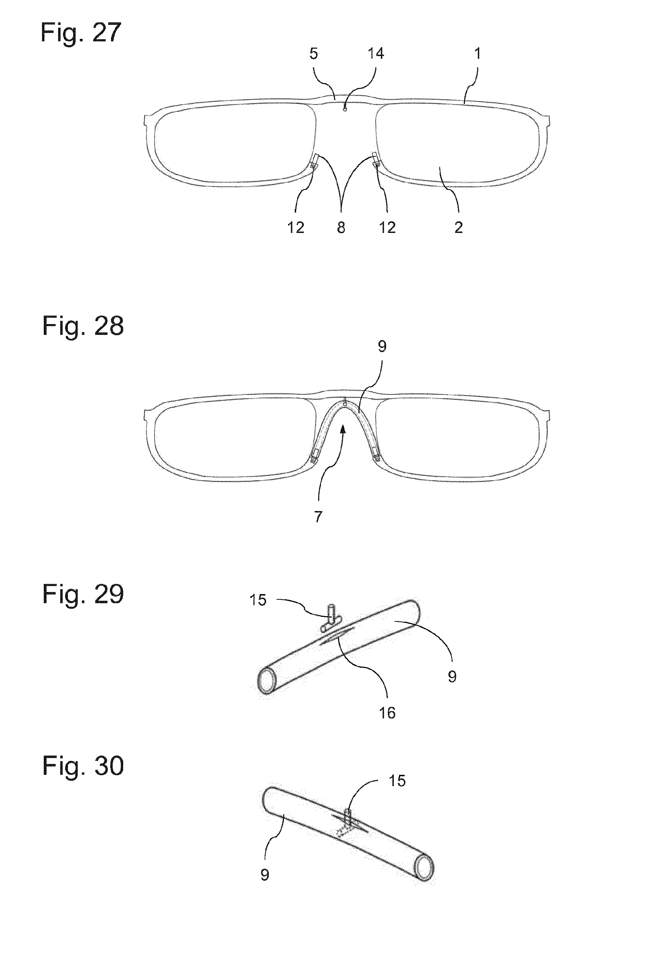

Schliesslich zeigen die Figuren 27 bis 30 eine zusätzliche Massnahme zum Fixieren des Hohlprofils 9. Dabei ist am Nasensteg 5 eine Stütze 15 angeordnet, die dem Hohlprofil 9 einen zusätzlichen Halt verleiht und es daran hindert, einerseits sich von den Stützen 8 zu lösen und andererseits auch , sich mit dem Bogen aus der Ebene des Brillengestells 1 zu verschieben. Wie insbesondere Figur 29 zeigt, kann die Stütze 15 als kleiner Stift ausgebildet sein, der an seinem freien Ende einen quer zu ihm orientierten weiteren Stift oder ein Plättchen trägt. An dieser Stütze 15 kann das Hohlprofil 9 in einfacher Weise fixiert werden, indem darin ein Schlitz 16 angebracht wird, in den die Stütze 15 greift.

Wie die Figuren zeigen, können die Träger 8 länger oder kürzer ausgebildet sein. Kürzere Träger, wie etwa in den Figuren 11 bis 14 und 27 bis 28 gezeigt, erlauben eine höhere Flexibilität der Nasenstütze 7, währen durch längere Träger, wie beispielsweise in den Figuren 1 bis 10 und 15 bis 23 dargestellt, die Nasenstütze 7 weniges flexibel, aber das Hohlprofil 9 besser geführt ist. Zudem können die Träger 8 auch gebogen ausgeführt sein, wie in den Figuren 1 bis 10 und 15 bis 23 gezeigt.

Der Ordnung halber sei abschliessend darauf hingewiesen, dass zum besseren Verständnis des Aufbaus des Brillengestells dieses beziehungsweise dessen Komponenten teilweise unmassstäblich und/oder vergrössert und/oder verkleinert dargestellt sind.

### Bezugszeichenliste

- 1: Brillengestell
- 2: Brillengläser
- 3: Bügel
- 4: Scharnier
- 5: Nasensteg
- 7: Nasenstütze
- 8: Träger
- 9: Hohlprofil
- 10: Ende von 9
- 11: Hinterschnitt
- 12: Gelenk
- 13: Abstand
- 14: Hohlraum
- 15: Stütze
- 16: Schlitz
- 17: oberer Quersteg
- 18: Erweiterung
- 19: Teilrahmen
- 20: Erweiterung
- 21: Teilrahmen

## Patentansprüche

1. Brillengestell (1) mit einer Nasenstütze (7), **dadurch gekennzeichnet, dass** die Nasenstütze (7) durch zwei am Brillengestell (1) angeordnete Träger (8) mit jeweils einem nach oben ragenden freien Ende und einem die freien Enden der Träger (8) in einem Bogen verbindenden flexiblen Hohlprofil (9) gebildet ist.

2. Brillengestell (1) nach Anspruch 1, **dadurch gekennzeichnet, dass** die Träger (8) einstückig mit dem Brillengestell (1) verbunden sind.

3. Brillengestell (1) nach Anspruch 1, **dadurch gekennzeichnet, dass** die Träger (8) durch ein Gelenk (12) schwenkbar mit dem Brillengestell (1) verbunden sind.

4. Brillengestell (1) nach einem der vorangehenden Ansprüche, **dadurch gekennzeichnet, dass** die Träger (8) gebogen sind, derart, dass Ihre freien Enden gegeneinander geneigt sind.

5. Brillengestell (1) nach einem der vorangehenden Ansprüche, **dadurch gekennzeichnet, dass** die Träger (8) im Bereich ihres freien Endes einen Hinterschnitt (11) aufweisen.

6. Brillengestell (1) nach einem der vorangehenden Ansprüche, **dadurch gekennzeichnet, dass** das Hohlprofil (9) aus Gummi oder Kunststoff, beispielsweise Silicon besteht

7. Brille, bestehend aus Brillengläsern (2) und einem Brillengestell (1) nach einem der vorangehenden Ansprüche
